## Europäisches Patentamt
## European Patent Office
## Office européen des brevets

(11) Publication number: **0 229 476 B1**

(12) **EUROPEAN PATENT SPECIFICATION**

(45) Date of publication of patent specification: **02.01.91**

(51) Int. Cl.⁵: **B 32 B 27/32, C 08 L 23/10**

(21) Application number: **86309316.7**

(22) Date of filing: **28.11.86**

(54) Polymeric films and processes for making them, multiple layer polymeric films and packages made from the films.

(30) Priority: **29.11.85 US 803029**

(43) Date of publication of application:
**22.07.87 Bulletin 87/30**

(45) Publication of the grant of the patent:
**02.01.91 Bulletin 91/01**

(84) Designated Contracting States:
**AT BE CH DE ES FR GB GR IT LI LU NL SE**

(56) References cited:
**GB-A-1 168 541**

(73) Proprietor: **AMERICAN NATIONAL CAN COMPANY**
**8770 West Bryn Mawr Avenue**
**Chicago, Illinois 60631 (US)**

(72) Inventor: **Genske, Roger Peter**
**971 Nenning Road**
**Neenah Wisconsin 54956 (US)**

(74) Representative: **Holdcroft, James Gerald, Dr. et al**
**Graham Watt & Co., Riverhead**
**Sevenoaks, Kent TN13 2BN (GB)**

Courier Press, Leamington Spa, England.

# EP 0 229 476 B1

**Description**

This invention pertains to packaging and more particularly to polymeric films and processes for making them, multiple layer polymeric films and packages made from the films.

This invention pertains in some respects to compositions of matter and single layer polymeric films made therefrom, and in other respects to multiple layer sheet materials and packages made therefrom. The sheet materials may be entirely polymeric, or they may include non-polymeric components such as metal or paper layers. The multiple layer materials may be flexible, or relatively rigid. The invention also pertains to processes for making the sheet materials. This invention is especially concerned with sheet materials for packaging, which are formed into packages, e.g. by heat sealing.

Various packaging applications, wherein a product is packaged in heat sealable sheet material, require that the finished package be able to withstand substantial abuse, such as in shipping and handling. In some packaging applications, the package, i.e., the packaging materials and the product being packaged, may have to be subjected to certain process treatments either during or after filling and sealing of the package. One instance is a retortable package, where the package is subjected to sterilizing conditions typically involving a temperature about 121°C (250°F) and appropriate pressures for steam sterilization, typically for periods of 30—60 minutes, but sometimes as little as 10 minutes is acceptable.

A multiplicity of packaging materials have been developed for use in heat seal-type packaging. While many of these packaging materials have experienced a degree of success, problems remain with packages which are subject to certain abuses related to their use. More particularly, packages containing liquid products experience hydraulic pressures exerted by the liquid product when they receive physical shocks such as when dropped, or moved in a rough manner. Where the shock is sufficiently strong, the heat seals may break. While certain sheet structures are being used, it would be desirable to develop improved economical sheet structures which can be used to make even stronger packages, and particularly, stronger package sealant layers and seals, to reduce the incidence of failure of the filled and sealed package. Packaging materials which have been subjected to high temperature processing are particularly susceptible to failure of the package seals especially when the package is abused.

Particularly referring, now, to packages which are subjected to thermal processing, as in retort processing typically at 121°C (250°F), sealant layers are known to be made of polypropylene, as in US—A—4,190,477. While polypropylene sealant layers are functionally capable of withstanding the processing conditions, the heat seals, as measured after processing, could desirably be stronger.

It is an object of this invention to provide improved packaging sheet materials, for example having improved capability to withstand physical shocks when formed into flexible heat sealed packages filled with liquid, improved packages made from these sheet materials, and processes of making such sheet materials.

Desirably, some such sheet materials will have good barrier properties to prevent or minimise transmission of gases or moisture into or out of the package.

Apart from seeking sheet materials capable of withstanding substantial physical shocks when formed into flexible heat sealed packages filled with liquid, and of providing a good barrier to transmission of gases or moisture, we have sought to develop sheet materials having sufficient optical clarity to enable visual inspection of the contents of and packages made from those sheet materials.

According to this invention, there is provided a multiple layer sheet material, comprising:

(a) a first polypropylene-based layer which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene; and

(b) a second layer comprising a metal foil affixed on one surface of the first layer.

A process according to the invention for making a multiple layer film comprises the steps of:

forming a particulate blend comprising polypropylene copolymer and polyisobutylene, and coextruding the blend with a polyamide and a polymeric barrier material to form a multiple layer sheet material, characterised in that the polypropylene/polyisobutylene blend is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene, and in that said sheet material comprises, in order through the sheet material, a first layer comprising the blend, a second layer of a polyamide, a third layer of barrier material and a fourth layer of a polyamide.

Also according to the present invention, there is provided a process for making a polymeric film, comprising compounding a masterbatch composition by (i) melting polyisobutylene, adding to the resulting melt particles of a polypropylene homopolymer or copolymer, preferably as pellets, to form a melt mixture, and (ii) heating the melt mixture to melt the polypropylene, and thoroughly mixing the polypropylene and polyisobutylene thereby to form said masterbatch composition, making a blend of the masterbatch composition and propylene ethylene copolymer, feeding the blend into an extruder and extruding the melted blend through a film forming die to form a substantially transparent film, characterised in that the masterbatch composition and the propylene ethylene copolymer are blended to make a blend of 35% to 90% by weight polypropylene copolymer and 65% to 10% by weight

2

polyisobutylene, the polypropylene copolymer comprising 70 to 98 mole percent propylene moieties and 30 to 2 mole percent ethylene moieties, the overall composition of said blend comprising at least 1.8 mole percent ethylene.

The invention further provides a process for making a polymeric film comprising melting polyisobutylene, adding to the melt particles of a polypropylene homopolymer or copolymer, preferably as pellets, to form a mixture, heating the mixture to melt the polypropylene, and thoroughly mixing the polypropylene and polyisobutylene into a polymeric blend, and feeding the blend into an extruder for extruding the melt through a film forming die, to form a substantially transparent film, characterised in that the polypropylene/polyisobutylene blend is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene.

One multiple layer film embodying the invention comprises:

(a) a first polypropylene-based layer which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, and the overall composition of said blend comprising at least 1.8 mole percent ethylene;

(b) a second layer of a polyamide, having one of its surfaces adhered to one surface of the first layer;

(c) a third, barrier layer having one of its surfaces adhered to the other surface of the second polyamide layer the composition of the third layer comprising (i) 50% to 90% by weight ethylene vinyl alcohol copolymer and (ii) 50% to 10% by weight of a polymer compatible with ethylene vinyl alcohol copolymer in blend composition, which polymer, for example, is polyetheramide block copolymer; and

(d) a fourth layer of a polyamide, having one of its surfaces adhered to the other surface of the third layer.

Another multiple layer film embodying the invention comprises:

(a) a first, polypropylene-based layer which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, and the overall composition of the blend comprising at least 1.8 mole percent ethylene; and

(b) a second layer of a vinylidene chloride copolymer, which is adhered to one surface of the first layer of an intervening third layer of adhesive.

The invention comprehends packages made from polymeric films and sheet materials as defined above, such packages for example being fabricated from confronting plies of film or sheet material which are heat sealed around their borders.

The invention will be further explained in the non-limiting description which now follows.

The invention is embodied in one aspect in an unsupported polymeric film which is a blend of 10% to 65% by weight polyisobutylene and conversely 90% to 35% by weight of polypropylene copolymer. The polypropylene is preferably a copolymer having 70 to 98 mole percent propylene moieties and conversely 30 to 2 mole percent ethylene moieties. Preferred films have a blend composition of 20% to 40% by weight polyisobutylene and 80% to 60% by weight polypropylene copolymer. It is also preferred that the polypropylene copolymer is 92 to 98 mole percent propylene moieties and 2 to 8 mole percent ethylene moieties.

The process of making the films includes the steps of extruding the blend through a die, and cooling the extruded blend to form a solid. In the process, it is entirely acceptable and in some cases preferred to form a particulate blend of the polypropylene copolymer and the polyisobutylene, wherein the particles in the blend generally have a size greater than 0.5 μm diameter. The blend can be coextruded with other polymeric materials to form plural layer sheet structures.

The invention is also embodied in multiple layer sheet materials. In one such sheet material, a first layer is polypropylene-based and is composed of a polypropylene blend of the invention. The polypropylene used in the blend may be a copolymer having 70 to 98 mole percent propylene moieties and conversely 30 to 2 mole percent ethylene moieties. A second layer of a metal foil is affixed on one of the surfaces of the first layer. The first layer is preferably 60% to 80% by weight polypropylene copolymer and 40% to 20% by weight polyisobutylene. In more preferred forms, the polypropylene copolymer in the first layer is 92 to 98 mole percent propylene moieties and 2 to 8 mole percent ethylene moieties. In some embodiments of these sheet materials, the first layer is adhered to the second layer by an intervening polymeric adhesive. Other embodiments of the invention have additional layers. In one such embodiment, an abuse resistant layer is adhered to the other surface of the second layer (i.e. the metal foil layer) by an adhesive layer. Exemplary materials for use as the abuse resistant layer are oriented polyamides, oriented polyesters and oriented polypropylenes.

In one family of embodiments, the invention is exemplified by a multiple layer sheet material having a first layer of the blend of polypropylene copolymer and polyisobutylene and a second layer of metal foil, and then it may be conveneint to adhere the first layer to the second layer by use of an intervening adhesive layer of polypropylene copolymer. In some cases, it is expedient to include a primer between the second layer and the polypropylene copolymer layer. A preferred primer has carboxy moieties. Further, the layer of polypropylene copolymer includes carboxy moieties in some embodiments.

3

In another family of embodiments, the invention is exemplified by a multiple layer sheet material having barrier properties provided by certain polymeric materials. A first layer is of the blend of polypropylene copolymer and polyisobutylene. A second layer of a polyamide has one of its two opposing surfaces adhered to one surface of the first layer. A third barrier layer has one of its two opposing surfaces adhered to the other surface of the polyamide second layer. A preferred composition for the third layer is 50% to 90% by weight of a first material which is vinyl alcohol copolymer and 50% to 10% by weight of a second material which is a polymer compatible with ethylene vinyl alcohol copolymer in blend composition. "Compatible" means the capability for polymers to be extruded in blend composition. A fourth layer of the structure is a polyamide, which has one of its two opposing surfaces adhered to the other surface of the third layer. In some preferred versions of this family of embodiments, the second material is polyetheramide block copolymer. For structures desiring or requiring higher levels of adhesion, a layer of an adhesive polymer may be interposed between the first and second layers. Finally, a fifth layer of biaxially oriented nylon may be adhered to the other surface of the fourth layer.

With the family of embodimemts having barrier properties provided by polymeric materials, one subfamily uses as the barrier layer a second layer comprised of vinylidene chloride copolymer. The second layer is adhered to the first layer on one of its surfaces by a third layer of an adhesive therebetween. A fourth layer of a polyamide may be adhered to the other surface of the second layer by a fifth layer of an adhesive therebetween.

The various films and sheet materials of the invention are susceptible to being made into packages by the formation of seals defining enclosing areas, to effect the closing and sealing of the packages.

Embodiments of the invention will now be described in more detail by way of example only with reference to the accompanying drawings, in which:

Figure 1 is a cross-section through a film employed in pracitising this invention,

Figure 2 is a cross-section through a two-layer sheet material embodying the invention, which incorporates a metal foil layer,

Figure 3 is a cross-section through a three-layer sheet material embodying the invention, which also incorporates a metal foil layer,

Figure 4 is a cross section through a six-layer sheet material embodying the invention, which also incorporates a metal foil layer,

Figure 5 is a cross-section through a seven-layer sheet material embodying the invention, and

Figure 6 is a cross-section through a five-layer sheet material embodying the invention.

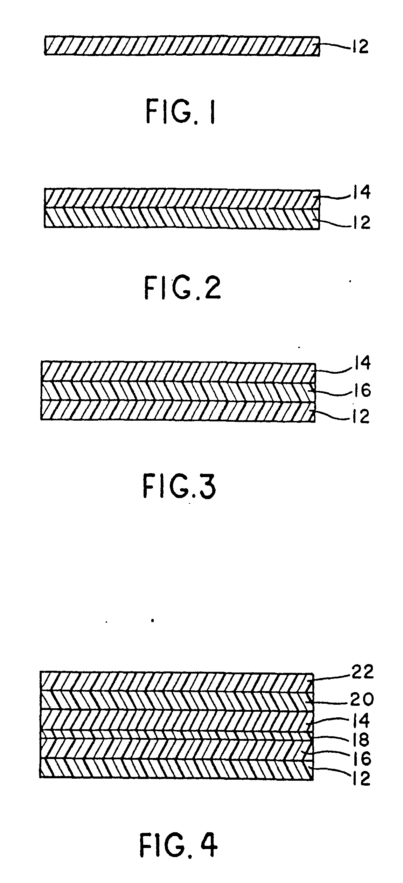

The invention employs a layer 12 of film of generally indefinite length. A cross-section of a piece of such a film is seen in Figure 1. The film is a blend of 10% by weight to 65% by weight polyisobutylene and 90% to 35% by weight polypropylene copolymer. The polypropylene copolymer is especially selected to contain 70 to 98 mole percent propylene moieties and 30 to 2 mole percent ethylene moieties. The overall blend composition has at least 1.8 mole percent ethylene.

Figures 2 and 3 show the invention as it is embodied in a simple multiple or plural layer sheet structure wherein a layer of metal foil is joined to the blend layer. In the structure of Figure 2, the foil layer 14 is adhered directly to the blend layer 12 without the use of intervening adhesives. The structure of Figure 3 is similar but has a third adhesive layer 16 to promote improved adhesion between layers 12 and 14.

Figure 4 illustrates a more complex form of sheet structure embodying the invention, which includes therein a layer of metal foil. The Figure 4 structure includes the same layers 12, 14, and 16 as in Figure 3, but in addition has an optional primer layer 18 between layers 14 and 16. An abuse resistent layer 22 is adhered to foil layer 14 by an intervening adhesive layer 20.

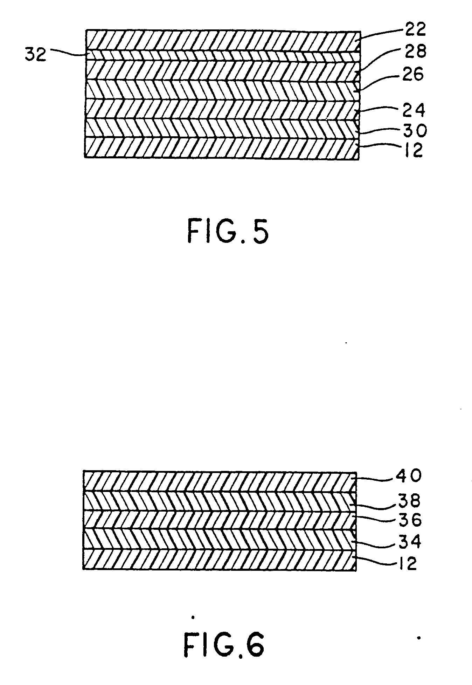

Figure 5 illustrates a multiple layer polymeric barrier film according to the invention. In this embodiment, an adhesive layer 30 is adhering a nylon layer 24 to the blend layer 12. A barrier layer 26 includes ethylene vinyl alcohol copolymer (EVOH) for reducing transmission of gases through the film. Nylon layer 28 is adjacent EVOH layer 26. An abuse resistant layer 22 is shown adhered to nylon layer 28 for the purpose of providing further physical protection of the overall film, but this layer 22 is optional. Layer 32 is an optional adhesive layer.

Figure 6 shows another embodiment of a multiple layer barrier film which uses, as a barrier, a layer 34 of vinylidene chloride copolymer. In this illustrated embodiment, layer 12 is the blend layer, layer 36 is a barrier layer of Saran® and layer 40 is a layer of nylon. Intervening layers 34 and 38 are adhesives functional to hold the respective layers to each other, and functional to hold the structure together as a whole.

It is entirely possible to incorporate the invention, including any of the embodiments herein, as a substructure, into other structures. Similarly, additional layers may be added to any of the structures specifically disclosed herein without departing from the scope and intent of the invention.

The blends

The blends of layer 12 have two essential components. The first component is polyisobutylene. The second component is polypropylene copolymer. We have found that it is critical that the polypropylene component contain some ethylene in order to impart the overall blend composition the desired degree of shock resistance. The polypropylene component of the blend may be all copolymer or a blend of copolymer and homopolymer. The recitation of polypropylene copolymer hereinafter includes blends of copolymer and polypropylene homopolymer. While blends of polypropylene and polyisobutylene may be made using polypropylene homopolymer, and heat sealable sheet materials may be made therefrom, those sheet materials exhibit less shock resistance than the preferred structures of the invention.

With the inclusion of as little as 1.8 mole percent ethylene in the propylene component, improvement is seen in the shock resistance of packages made therefrom. As the amount of ethylene is increased, the shock resistance generally improves, and up to 30 mole percent ethylene may be used. As the amount of ethylene is increased, the capability of the blend to withstand heat (heat resistance) is decreased. At the higher fractions of ethylene content, the heat resistance is less than desired for some uses. Thus, for those uses in which the packaging sheet material is required to have high heat resistance, an ethylene content of 2 to 8 mole percent is preferred in the polypropylene copolymer.

Since the various polymeric layers in the invention are intended to be used primarily in extrusion process through a slot die, it is significant that each material be obtained in such a form as is readily conducive to its use in the extrusion process, and that it be obtained at economically favorable cost. As is well known, polyisobutylene is commercially supplied in the form of large blocks, or bales. In order to prepare polyisobutylene for extrusion, it is thus necessary to convert it to another form. Conversion of polyisobutylene into pellets is not known to have been done. Its rubbery physical characteristics may prevent its being prepared in pellet form, as is, for example, the polypropylene copolymer. The polyisobutylene may be melted from the bale and blended with a polypropylene, either copolymer or homopolymer, to form a master batch of a blend of polyisobutylene and polypropylene. The so-formed master batch may be formed into conventional pellets for use in extruding the blends of this invention to form layers. In making the final blends for use herein, the master batch pellets may be blended with additional polypropylene, which must include copolymers, to make the desired blend ratio of polyisobutylene to polypropylene.

The preparation of a master batch by melt mixing together polyisobutylene with polypropylene copolymer to form a blend is seen as significant to the desired objective of economically forming a film from a blend of polyisobutylene and polypropylene copolymer. While a master batch may be so blended as to yield a blend composition as desired for forming a film, it is usually preferred to form a master batch having a lower polypropylene content and to form it into conventional pellets suitable for extrusion. This minimizes both the cost of making the master batch and the thermal exposure of the polypropylene. The final desired blend composition is economically achieved by dry blending a predetermined amount of the master batch pellets with a pre-determined amount of polypropylene copolymer pellets and extruding the mixture, thus achieving the desired final blend composition in the extruded layer.

In a typical formation of blend layers in practising the invention, a master batch is compounded by melting polyisobutylene and mixing into the melt an amount of polypropylene, preferably as pellets, sufficient to make a blend of 65% by weight polyisobutylene and 35% polypropylene. The blend is heated sufficiently to melt all the polypropylene, and is mixed thoroughly. The melted master batch blend is then formed into pellets and cooled. In the formation of the final composition, pellets of the master batch are mixed with pellets of a selected polypropylene copolymer. A typical blend ratio with the above-mentioned master batch is 42% by weight polypropylene and copolymer and 58% by weight master batch. The final composition is thus 37.7% polyisobutlene and 62.3% polypropylene, including the polypropylene in the master batch. Where the selected polypropylene copolymer is, for example 4% ethylene, and it is used for both the blend component and in the master batch, the overall content of the blend is 2.5% ethylene.

The blends used in the invention may be compounded in the melted mixture of the master batch in the desired final blend ratio to be extruded. When the desired final blend is thus made as the master batch, the compounded pellets may be extruded without further addition, as of pellets of polypropylene copolymer. While this process, which eliminates a step of dry blending, does produce acceptable blends for use in the invention, where the at least 1.8 percent ethylene present in the form of polypropylene copolymer, the cost of processing the additional polypropylene in the melt compounding operation usually exceeds the cost of the eliminated dry blending step. Thus, the two step process is usually preferred in preparing material for extrusion processing.

## The multiple layer materials

The blends described above have preferred utility when used with additional layers. The additional layers may be polymeric or non-polymeric. Conventional additives and fillers may be used. Normal amounts of additives and modifiers may be included in the blend layer 12.

In the formation of the sheet material of Figure 2, it is desirable to select, for inclusion in the blend composition of layer 12, a polymer having carboxy modifications thereto, to enhance adhesion between blend layer 12 and metal foil layer 14. Carboxy modified propylene polymers are available from Mitsui Company, Japan as "QF"® series polymers.

Another way of obtaining adhesion between layers 12 and 14 is through a separate layer of adhesive as 16 of Figure 3. A relatively thin layer of adhesives may be used, such as 3.2 to $4.9 \times 10^{-3}$ kg/m² (2 to 3 pounds per 3000 square foot ream). Various adhesives are conventionally known for use in adhesion to metal foil, as in layer 14. Exemplary of these adhesives, for use in layer 16 are the curing type polyester urethane adhesives. One such acceptable adhesive is available from Morton Chemical Company as Adcote® 506—40. The adhesive layer 16 may be in direct contact with the foil layer 14, or a primer layer, as at 18 in Figure 4 may be interposed between foil layer 14 and adhesive layer 16. The primer layer 18, when used, is

## EP 0 229 476 B1

only of sufficient thickness to ensure its continuity. A suitable primer or Morprime® from Morton Chemical Company, a modified polypropylene provided in a liquid carrier. The liquid primer is conveniently applied to the surface of the metal foil layer 14, and the liquid removed by evaporation.

The primer may then be cured by application of heat. Finally, the adhesive layer 16 and blend layer 12 are applied to the primed foil layer 14, preferably with pressure to promote adhesion between the several and respective layers in the composite structure of layers 12, 14, 16 and 18.

In completion of the structure shown in Figure 4 an abuse resistant layer 22 may be adhered to the other surface of foil layer 14 by use of an adhesive layer 20. Materials conventionally known for their abuse resistance properties, such as oriented nylon, oriented polyester and oriented polypropylene, are satisfactory. Conventional adhesives are known for adhering the abuse resistant materials to metal foil. The adhesive selected will, of course, depend on the selection of the abuse resistant layer. In one such combination, a layer 22 of biaxially oriented nylon is adhered to foil layer 14 by a curing-type polyester urethane adhesive.

The metal foil layer 14 in the embodiments of Figures 2, 3 and 4 provides an excellent barrier to transmissions of gases and light through the sheet structure. There are, however, applications for sheet materials where the use of the metal foil is not desirable. Figures 5 and 6 illustrate multiple layer films having polymeric layers that provide barriers to gaseous transmissions through the films.

In the structures of Figure 5, layer 12 is the polyisobutylene-polypropylene copolymer blend. Layers 24 and 28 are nylon. Layer 26 is EVOH or a blend of EVOH. Layer 30 is an adhesive effective to bond layers 12 and 24 into the structure. Layer 22 is an abuse resistant layer, adhered to nylon layer 28, optionally through use of an adhesive layer 32. Layers 24 and 28 preferably contain nylon 6 and may contain other polyamide polymers. Other nylons may be substituted for nylon 6 where heat resistance is not critical. While layers 26 may be EVOH, a preferred composition for layer 26 is a blend of 50% by weight to 90% by weight of a first polymer of EVOH and 50% by weight to 10% by weight of a second polymer compatible with EVOH in blend composition. The second polymer may be selected with a substantial degree of freedom, and initial determination of suitability of any given polymer is dependent primarily on its compatibility in blend composition with EVOH. Among the suitable choices for the second polymer are ethylene ethyl acrylate, ethylene acrylic acid, linear low density polyethylene, ionomer, adhydride modified low density polyethylene, anhydride modified medium density polyethylene, anhydride modified high density polyethylene, nylon, and polyetheramide block copolymer. The selection of the specific material for the second polymer will, of course, depend on the composition and use of the overall multiple layer structure. With the disclosure herein, expedient selection of the second polymer can be made by those of average skill in the art.

Adhesive layers 30 and 32 may conveniently be polyester urethane, and the structure may conveniently be formed by adhesive lamination techniques. In formation by adhesive lamination, three separate substructures may initially be formed The first substructure is the blend layer 12 which is formed by extrusion as for the single layer film of Figure 1. The second substructure is the three layer substructure/ nylon/EVOH/nylon/ of layers 24, 26 and 28. This three layer substructure is conveniently formed by conventional coextrusion. The third substructure is the abuse resistant layer 22, which is typically formed by conventional extrusion and which is usually followed by molecular orientation. After the three substructures are formed, they may be combined by conventional lamination processes. They may alternatively be combined by other processes such as extrusion lamination processes.

In another process for making multiple layer films as in Figure 5, layers 12, 30, 24, 26 and 28 may be coextruded as a first substructure. Layer 22 is separately prepared as above. Layer 22 is joined to layer 28 by conventional methods.

Another family, of multiple layer structures of the invention is illustrated in Figure 6. Layer 12 is the blend layer. Layer 36 is a vinylidene chloride copolymer. Preferred copolymers for layer 36 are vinyl chloride-vinylidene chloride copolymers and vinylidene chloride methylacrylate copolymers. Layer 40 is nylon. Layers 34 and 38 are adhesives which adhere together the several layers of the structure. The structure is typically formed by separately forming layers 12, 36 and 40 by individual extrusion processes. The composite multiple layer structure is then assembled by conventional combining process, such as adhesive lamination or extrusion lamination.

Other combinations of conventional processes can be used to form the structures of the invention, and will now be obvious to those skilled in the art.

Sheet materials such as those illustrated in Figures 5 and 6 may be formed from materials, each of which offers substantial optical transparency. The finished sheet materials represented by Figures 5 and 6 also typically have sufficient optical clarity through the sheet material to enable visual inspection of the package contents. Other structures of the invention which do not use opaque materials such as metal foil, paper or fillers, also typically offer the same optical clarity.

Flexible packages, of the pouch type, may be made from any of the single or multiple layer sheet materials of the invention using conventional processes to form heat seals about an enclosed area defined by facing portions of the sheet material. The sheet materials may also be used in combination with other packaging structures. Sheet structures may, for example, be used as lid materials for rigid trays formed from other packaging structures.

The invention will now be illustrated further by the following non-limiting Examples.

6

Example 1

Pellets of polypropylene copolymer, containing 4% ethylene were mixed with pellets of a master batch which consisted of 65% polyisobutylene and 35% polypropylene copolymer, where the polypropylene copolymer used in the master batch contained 4% ethylene. The mixture was 58% by weight pellets of the master batch and 42% pellets of the polypropylene copolymer yielding a blend which was 37.7% polyisobutylene, 59.8% propylene and 2.5% ethylene. The mixture was extruded through a slot die to form a single layer film 0.10 mm (4 mils) thick. The so-prepared film was laminated to one surface of a layer of 0.009 mm (35 gauge) aluminum foil using a polyester urethane adhesive. The other surface of the foil was laminated to a layer of 0.015 mm (60 gauge) biaxially oriented nylon, using a polyester urethane adhesive.

Example 2

A sheet structure was prepared as in Example 1 except that the polypropylene used to make the master batch was a homopolymer.

Comparative Example 1

A sheet structure was prepared as in Example 1 except that the layer comparable to the blend layer in Example 1 was polypropylene copolymer, without any polyisobutylene.

Comparative Example 2

A sheet structure was prepared as in Example 2 except that the polypropylene blended with the master batch was a homopolymer.

Example 3

A single layer film was prepared for the blend layer as in Example 1. A three-layer substructure was prepared by coextruding an EVOH layer as a core layer with out layers of nylon, to form a substructure of the nature of /nylon/EVOH/nylon/. The three-layer substructure was then laminated to the blend layer using a polyester urethane adhesive.

Example 4

A five layer film was prepared by coextruding through a combining die a structure of /nylon/EVOH/ nylon/adhesive/blend/. The blend layer was the same mixture as was prepared by mixing pellets for extrusion in Example 1. The adhesive material was QF®500X, from Mitsui Company, Japan. In the finished film, the blend layer is 0.10 mm (4.0 mils) thick. The EVOH layer was 0.013 mm (0.5 mil) thick. The nylon layers are $6.3 \times 10^{-3}$ mm (0.25 mil) thick. The adhesive is minimal thickness for continuity, $2.5 \times 10^{-3}$ mm (0.1 mil).

Example 5

A single layer film was prepared for the blend layer as in Example 1. The blend layer was laminated to one surface of a layer of biaxially oriented Saran® using a polyester urethane adhesive having an aliphatic chain catalyst. A layer of 0.015 mm (60 gauge) biaxially oriented nylon was laminated to the other surface of the Saran® using the same polyester urethane adhesive.

Example 6

A multiple layer sheet material was made as in Example 1 except that the ratio of the mixture of pellets in the blend layer was 30% by weight pellets of the master batch and 70% pellets of the polypropylene copolymer. The resulting blend composition was 19.5% polyisobutylene and 80.5% polypropylene copolymer.

The sheet materials of Example 1, Example 2 and Comparative Example 1 were used to make heat sealed packages containing 2.96 l (100 fl. oz.) of water. The edge seals were 9.5 mm (3/8 inch) wide. The packages were then retort processed at 121°C (250°F) and 1.72 bar (25 psig) pressure for 30 minutes. The retort processed packages were cooled to room temperature. A test package was then placed in a simulated shipping container. A flat, uniform weight was placed on top of the package; 6.36 kg (14 lb.) weight to simulate stacking the packages 3 high, or a 15.89 kg (35 lb.) weight to simulate stacking the packages 6 high.

The shipping containers were then dropped onto a hard surface from various heights at 15.2 cm (6 inch) intervals. Each package was subjected to one drop from a selected height. After the drop, each package was inspected for weakening or failure at the seal area. In general, six drops were made of six packages at each height reported. In some cases, the package seals were substantially weakened, as evidenced by stretching, or narrowing of the seal width though no leakage occurred. These weakened packages were counted as failures. The results of all the tests are seen in Table 1.

TABLE 1

| Sample Identification | Drop height survived without package failure | |
|---|---|---|
| | 6.36 kg (14 lb.) top load | 15.89 kg (35 lb.) top load |
| Example 1 | all survive at 0.63 m (24 inches) | all survive at 15.2 cm (6 inches) |
| Example 2 | all survive at 0.46 m (18 inches) 60% fail at 0.63 m (24 inches) | all fail at 15.2 cm (6 inches) — |
| Comparative Example 1 | all fail at 15.2 cm (6 inches) | all fail at 15.2 cm (6 inches) |

The results show that the packages made from the structures of Example 1 and Example 2 were significantly better than the packages of Comparative Example 1 wherein the blend layer did not contain polyisobutylene. Further, packages of Example 1 tended to be somewhat better than those of Example 2 wherein the packages of Example 2 contained more homopolymer polypropylene component by virtue of the hompolymer in the master batch.

Thus it is seen that the invention provides novel sheet materials having improved capability to withstand physical shocks when formed into flexible heat sealed packages filled with liquid.

It is further seen that the sheet materials and packages embodying the invention provide good barrier properties to transmission of gases into or out of the package. Certain of the sheet materials and packages have good optical clarity through the sheet material, enabling visual inspection of the contents.

**Claims**

1. A multiple layer sheet material, comprising:

(a) a first polypropylene-based layer (12) which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties the overall composition of said blend comprising at least 1.8 mole percent ethylene; and

(b) a second layer (14) comprising a metal foil affixed on one surface of the first layer.

2. A sheet material according to Claim 1, wherein the first layer blend comprises 60% to 80% by weight polypropylene copolymer and 40% to 20% by weight polyisobutylene.

3. A sheet material according to Claim 1 or Claim 2, wherein the polypropylene copolymer in the first layer blend comprises 92 to 98 mole percent propylene moieties and 2 to 8 mole percent ethylene moieties.

4. A sheet material according to Claim 1, 2 or 3, wherein the first layer (12) is adhered to the second layer (14) by an intervening polymeric adhesive (16).

5. A sheet material according to Claim 4, wherein a first surface of the second layer (14) is adhered by the polymeric adhesive (16) to one surface of the first layer (12), and wherein an abuse resistant layer (22) is adhered to the second surface of the metal foil second layer (14) by an adhesive layer (20).

6. A sheet material according to Claim 5, wherein the abuse resistant layer (22) is biaxially oriented nylon.

7. A sheet material according to any of Claims 1 to 6, wherein the first layer (12) is adhered to a first surface of the second layer (14) by a layer (16) of polypropylene copolymer therebetween.

8. A sheet material according to Claim 7, including a primer (18) between the second layer (14) and the polypropylene copolymer layer (12), the primer comprising carboxy moieties.

9. A sheet material according to Claim 7 or Claim 8 wherein the layer of polypropylene copolymer includes carboxy moieties.

10. A multiple layer sheet material, comprising:

(a) a first polypropylene-based layer (12) which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, and the overall composition of said blend comprising at least 1.8 mole percent ethylene;

(b) a second layer (24) of a polyamide, having one of its surfaces adhered to one surface of the first layer;

(c) a third, barrier layer (26) having one of its surfaces adhered to the other surface of the second polyamide layer (24) the composition of the third layer comprising (i) 50% to 90% by weight ethylene vinyl alcohol copolymer and (ii) 50% to 10% by weight of a polymer compatible with ethylene vinyl alcohol copolymer in blend composition; and

(d) a fourth layer (28) of a polyamide, having one of its surfaces adhered to the other surface of the third layer (26).

11. A sheet material according to Claim 10, wherein the blend of the first layer comprises 60% to 80% by weight polypropylene copolymer and 40% to 20% by weight polyisobutylene.

12. A sheet material according to Claim 10 or Claim 11, wherein the polypropylene copolymer in the first layer comprises 92 to 98 mole percent propylene moieties and 2 to 8 mole percent ethylene moieties.

13. A sheet material according to Claim 10, 11 or 12, further including a layer (30) of an adhesive polymer between said first and second layers (12, 24).

14. A sheet material according to any of Claims 10 to 13, further including a fifth layer (22), of biaxially oriented nylon, on the other surface of the fourth layer.

15. A sheet material according to any of Claims 11 to 14, wherein the polymer compatible with ethylene vinyl alcohol copolymer is polyetheramide block copolymer.

16. A multiple layer sheet material, comprising:

(a) a first, polypropylene-based layer (12) which is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, and the overall composition of the blend comprising at least 1.8 mole percent ethylene; and

(b) a second layer (36) of a vinylidene chloride copolymer, which is adhered to one surface of the first layer by an intervening third layer (34) of adhesive.

17. A sheet material according to Claim 16, further including a fourth layer (40) of a polyamide adhered to the other said surface of the second layer by a fifth layer (38) of adhesive.

18. A process for making a multiple layer film, the process comprising forming a particulate blend comprising polypropylene copolymer and polyisobutylene, and coextruding the blend with a polyamide and a polymeric barrier material to form a multiple layer sheet material, characterised in that the polypropylene/polyisobutylene blend is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene, and in that said sheet material comprises, in order through the sheet material, a first layer (12) comprising the blend, a second layer (24) of a polyamide, a third layer (26) of barrier material and a fourth layer (28) of a polyamide.

19. A process according to Claim 18, wherein the barrier material is made by blending 50% by weight to 90% by weight ethylene vinyl alcohol copolymer and 50% by weight to 10% by weight of a polymer compatible with ethylene vinyl alcohol copolymer.

20. A process according to Claim 18 or Claim 19, wherein the blend is made from particles which generally have a size greater than 0.5 μm in diameter.

21. A process according to any of Claims 18 to 20, wherein the compatible polymer is polyetheramide block copolymer.

22. A package made from the sheet material according to any of Claims 1 to 17.

23. A process for making a polymeric film, comprising compounding a masterbatch composition by (i) melting polyisobutylene to the resulting melt, adding particles of a polypropylene homopolymer or copolymer, preferably as pellets, to form a melt mixture, and (ii) heating the melt mixture to melt the polypropylene, and thoroughly mixing the polypropylene and polyisobutylene thereby to form said masterbatch comprising, making a blend of the masterbatch composition and propylene ethylene copolymer feeding the blend into an extruder and extruding the melted blend through a film forming die to form a substantially transparent film, characterised in that the masterbatch composition and the propylene ethylene copolymer are blended to make a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene.

24. A process for making a polymeric film comprising melting polyisobutylene, adding to the melt particles of a polypropylene homopolymer or copolymer, preferably as pellets, to form a mixture, heating the mixture to melt the polypropylene, and thoroughly mixing the polypropylene and polyisobutylene into a polymeric blend, and feeding the blend into an extruder for extruding the melt through a film forming die, to form a substantially transparent film, characterised in that the polypropylene/polyisobutylene blend is a blend of 35% to 90% by weight polypropylene copolymer and 65% to 10% by weight polyisobutylene, the polypropylene copolymer comprising 70 to 98 mole percent propylene moieties and 30 to 2 mole percent ethylene moieties, the overall composition of said blend comprising at least 1.8 mole percent ethylene.

25. A process according to Claim 23 or Claim 24, comprising coextruding the blend with a polyamide and a polymeric barrier material to form a multiple layer sheet material, said sheet material comprising, in order through the sheet material, a first layer (12) comprising the blend, a second layer (24) of a polyamide, a third layer (26) of barrier material and a fourth layer (28) of a polyamide.

**Patentansprüche**

1. Ein Mehrschichtenfolienmaterial, umfassend:

(a) eine erste Schicht (12) auf Polypropylenbasis, die eine Mischung von 35 bis 90 Gew.-% Polypropylencopolymer und 65 bis 10 Gew.-% Polyisobutylen ist, wobei das Polypropylencopolymer 70 bis

9

98 Mol-% Propylenanteile und 30 bis 2 Mol-% Äthylenanteile umfaßt, die Gesamtzusammensetzung dieser Mischung wenigstens 1,8 Mol-% Äthylen umfaßt, und

(b) eine zweite Schicht (14), die eine Metallfolie umfaßt, die auf einer Oberfläche der ersten Schicht befestigt ist.

2. Ein Folienmaterial nach Anspruch 1, bei dem die erste Schichtmischung 60 bis 80 Gew.-% Polypropylencopolymer und 40 bis 20 Gew.-% Polyisobutylen umfaßt.

3. Ein Folienmaterial nach Anspruch 1 oder Anspruch 2, bei dem das Polypropylencopolymer in der ersten Schichtmischung 92 bis 98 Mol-% Propylenanteil und 2 bis 8 Mol-% Äthylenanteil umfaßt.

4. Ein Folienmaterial nach Anspruch 1, 2 oder 3, bei dem die erste Schicht (12) an der zweiten Schicht (14) durch ein dazwischenliegendes polymeres Klebmittel (16) zum Anhaften gebracht ist.

5. Folienmaterial nach Anspruch 4, bei dem eine erste Oberfläche der zweiten Schicht (14) durch das polymere Klebmittel (16) an eine Oberfläche der ersten Schicht (12) angeklebt ist und bei dem eine gegen Fehlbehandlung resistente Schicht (22) an die zweite Oberfläche der zweiten Metallfolien-Schicht (14) durch eine Adhäsions- oder Klebmittelschicht (20) angeklebt ist.

6. Ein Folienmaterial nach Anspruch 5, bei dem die gegen Fehlbehandlung resistente Schicht (22) biaxial orientiertes Nylon ist.

7. Ein Folienmaterial nach einem der Ansprüche 1 bis 6, bei dem die erste Schicht (12) an eine erste Oberfläche der zweite Schicht (14) durch eine zwischengelagerte Schicht (16) aus Polypropylencopolymer angeklebt ist.

8. Ein Folienmaterial nach Anspruch 7, das ein Grundiermittel (18) zwischen der zweiten Schicht (14) und der Polypropylencopolymerischicht (12) enthält, wobei das Grundiermittel Carboxy-Anteile umfaßt.

9. Ein Folienmaterial nach Anspruch 7, oder Anspruch 8, bei dem die Schicht aus Polypropylen copolymer Carboxy-Anteile enthält.

10. Ein Mehrschichtenfolienmaterial, umfassend:

(a) eine erste Schicht (12) auf Polypropylenbasis, die eine Mischung von 35 bis 90 Gew.-% Polypropylencopolymer und 65 bis 10 Gew.-% Polyisobutylen ist, wobei das Polypropylencopolymer 70 bis 98 Mol-% Propylen-Anteile und 30 bis 2 Mol-% Äthylen-Anteil umfaßt und die Gesamtzusammensetzung dieser Mischung wenigstens 1,8 Mol-% Äthylen umfaßt;

(b) eine zweite Schicht (24) aus einem Polyamid, deren eine Oberfläche an einer Oberfläche der ersten Schicht haftet:

(c) eine dritte, und zwar Sperrschicht (26), von der eine ihrer Oberflächen an der anderen Oberfläche der zweiten Polyamid-Schicht (24) haftet, wobei die Zusammensetzung der dritten Schicht (i) 50 bis 90 Gew.-% Äthylenvinylalkoholcopolymer und (ii) 50 bis 10 Gew.-% eines Polymeren, das mit Äthylenvinylalkoholcopolymer in Mischungs-zusammensetzung kompatibel ist, umfaßt, und

(d) eine vierte Schicht (28) eines Polyamids, deren eine Oberfläche an der anderen Oberfläche der dritten Schicht (26) haftet.

11. Ein Folienmaterial nach Anspruch 10, bei dem die Mischung der ersten Schicht 60 bis 80 Gew.-% Polypropylencopolymer und 40 bis 20 Gew.-% Polyisobutylen umfaßt.

12. Ein Folienmaterial nach Anspruch 10 oder Anspruch 11, bei dem das Polypropylencopolymer in der ersten Schicht 92 bis 98 Mol-% Propylen-Anteile und 2 bis 8 Mol-% Äthylen-Anteile umfaßt.

13. Ein Folienmaterial nach Anspruch 10, 11 oder 12, das weiterhin eine Schicht (30) aus einem Adhäsions- oder Klebmittelpolymer zwischen der ersten und der zweiten Schicht (12, 24) enthält.

14. Ein Folienmaterial nach einem der Ansprüche 10 bis 13, das weiterhin eine fünfte Schicht (22) aus biaxial orientiertem Nylon auf der anderen Oberfläche der vierten Schicht enthält.

15. Ein Folienmaterial nach einem der Ansprüche 11 bis 14, bei dem das mit Äthylenvinylalkoholcopolymer kompatible Polymer Polyätheramid-Blockcoplymer ist.

16. Ein Mehrschichtenfolienmaterial, umfassend:

(a) eine erste Schicht (12) auf Polypropylenbasis, die eine Mischung von 35 bis 90 Gew.-% Polypropylencopolymer und 65 bis 10 Gew.-% Polyisobutylen ist, wobei das Polypropylencopolymer 70 bis 98 Mol-% Propylen-Anteile und 30 bis 2 Mol-% Äthylen-Anteile umfaßt und die Gesamtzusammensetzung der Mischung wenigstens 1,8 Mol-% Äthylen umfaßt, und

(b) eine zweite Schicht (36) aus einem Vinylidenchlorid-Copolymer, die an einer Oberfläche der ersten Schicht durch eine zwischengelagerte dritte Schicht (34) aus Klebmittel angeklebt ist.

17. Ein Folienmaterial nach Anspruch 16, das weiterhin eine vierte Schicht (40) aus einem Polyamid enthält, die an der anderen besagten Oberfläche der zweiten Schicht durch eine fünfte Schicht (38) aus Klebmittel angeklebt ist.

18. Ein Verfahren zum Herstellen eines Mehrschichtenfilmes oder einer Mehrschichtenfolie, wobei das Verfahren das Bilden einer teilchenförmigen Mischung, die Polypropylencopolymer und Polyisobutylen umfaßt, und das Coextrudieren der Mischung mit einem Polyamid und einem polymeren Sperrmaterial umfaßt, um eine Mehrschichtenfolienmaterial zu bilden, dadurch gekennzeichnet, daß die Polypropylen/ Polyisobutylen-Mischung eine Mischung aus 35 bis 90 Gew.-% Polypropylencopolymer und 65 bis 10 Gew.-% Polyisobutylen ist, das Polypropylencopolymer 70 bis 98 Mol-% Propylen-Anteile und 30 bis 2 Mol.-% Äthylen-Anteile umfaßt, die Gesamtzusammensetzung dieser Mischung wenigstens 1,8 Mol-% Äthylen umfaßt, und daß dieses Folienmaterial in der Reihenfolge durch das Folienmaterial eine erste Schicht (12), die die Mischung umfaßt, eine zweite Schicht (24) aus einem Polyamid, eine dritte Schicht (26) aus Sperrmaterial und eine vierte Schicht (28) aus einem Polyamid umfaßt.

19. Ein Verfahren nach Anspruch 18, bei dem das Sperrmaterial durch Mischen von 50 Gew.-% bis 90 Gew.% Äthylenvinylalkohol-Copolymer und 50 Gew.-% bis 10 Gew.-% eines mit Äthylenvinylalkohol-Copolymer kompatiblen Polymeren hergestellt wird.

20. Ein Verfahren nach Anspruch 18 oder Anspruch 19, bei dem die Mischung aus Teilchen hergestellt wird, die allgemein eine Größe von mehr als 0,5 µm im Durchmesser aufweisen.

21. Ein Verfahren nach einem der Ansprüche 18 bis 20, bei dem das kompatible Polymer Polyätheramid-Blockcopolymer ist.

22. Eine Verpacking, die aus dem Folienmaterial nach einem der Ansprüche 1 bis 17, hergestellt ist.

23. Ein Verfahren zum Herstellen eines polymeren Filmes oder einer polymeren Folie, das das Compoundieren einer Masterbatches-Zusemmensetzung durch (i) Schmelzen von Polyisobutylen, Hinzugeben von Teilchen aus einem Polypropylenhomopolymer oder -copolymer zu der entstehenden Schmelze, vorzugsweise als Pellets, um eine Schmelzmischung zu bilden, und (ii) Erhitzen der Schmelzmischung, um das Polypropylen zu schmelzen, und vollständiges Durchmischen des Polypropylens und Polyisobutylens, um dadurch die besage Masterbatches-Zusammensetzung zu bilden, das Herstellen einer Mischung aus der Masterbatches-Zusammensetzung und Propylen-Äthylen-Copolymer, das Einführen der Mischung in einen Extruder und das Extrudieren der geschmolzenen Mischung durch eine film- oder folienbildende Form umfaßt, um einem im wesentlichen transparenten Film oder eine im wesentlichen transparente Folie zu bilden, dadurch gekennzeichnet, daß die Masterbatches-Zusammensetzung und das Propylen-Äthylen-Copolymer gemischt werden, um eine Mischung von 35 bis 90 Gew.-% Polypropylencopolymer und 65 bis 10 Gew.-% Polyisobutylen herzustellen, wobei das Polypropylencopolymer 70 bis 98 Mol-% Propylen-Anteil und 30 bis 2 Mol-% Äthylen-Anteil umfaßt und die Gesamtzusammensetzung dieser Mischung wenigstens 1,8 Mol-% Äthylen umfaßt.

24. Verfahren zum Herstellen eines polymeren Films oder einer polymeren Folie, das das Schmelzen von Polyisobutylen, das Hinzugeben von Teilchen eines Polypropylenhomopolymeren oder -copolymeren zu der Schmelze, vorzugsweise als Pellets, um eine Mischung zu bilden, das Erhitzen der Mischung, um das Polypropylen zu schmelzen, und das völlige Durchmischen des Polypropylenes und Polyisobutylens zu einer polymeren Mischung und das Einführen der Mischung in einen Extruder zum Extrudieren der Schmelze durch eine film- oder folienbildende Form umfaßt, um einen im wesentlichen transparenten Film oder eine im wesentlichen transparente Folie zu bilden, dadurch gekennzeichnet, daß die Polypropylen/Polyisobutylen-Mischung eine Mischung von 35 bis 90 Gew.-% Polypropylencopolymer und 65 bis 10 Gew.-% Polyisobutylen ist, das Polypropylencopolymer 70 bis 98 Mol-% Propylen-Anteil und 30 bis 2 Mol-% Äthylen-Anteile umfaßt und die Gesamtzusammensetzung dieser Mischung wenigstens 1,8 Mol-% Äthylen umfaßt.

25. Ein Verfahren nach Anspruch 23 oder Anspruch 24, das das Coextrudieren der Mischung mit einem Polyamid und einem polymeren Sperrmaterial umfaßt, um eine Mehrschichtenfolienmaterial zu bilden, wobei dieses Folienmaterial in der Reihenfolge durch das Folienmaterial eine erste Schicht (12), die die Mischung umfaßt, eine zweite Schicht (24) aus einem Polyamid, eine dritte Schicht (26) aus Sperrmaterial und eine vierte Schicht (28) aus einem Polyamid umfaßt.

**Revendications**

1. Une matière en feuille multicouche comprenant:

(a) une première couche à base de polypropylène (12), qui est une mélange à 35% à 90% en poids de copolymère de polypropylène et de 65% à 10% en poids de polyisobutlenène, le copolymère de polypropylène comprenant 70 à 98 mole pour cent de parties de propylène et 30 à 2 mole pour cent de parties d'éthylène, la composition d'ensemble dudit mélange comprenant au moins 1,8 mole pour cent d'éthylène; et

(b) une deuxième couche (14) comprenant une feuille métallique fixée sur une surface de la première couche.

2. Une matière en feuille selon la revendication 1, dans laquelle le mélange de la première couche comprend 60% à 80% en poids de copolymère de polypropylène et 40% à 20% en poids de polyisobutylène.

3. Une matière en feuille selon la revendication 1 ou la revendication 2, dans laquelle le copolymère de polypropylène du mélange de la première couche comprend 92 à 98 mole pour cent de parties de propylène et 2 à 8 mole pour cent de parties d'éthylène.

4. Une matière en feuille selon la revendication 1, 2 ou 3, dans laquelle la première couche (12) adhère à la deuxième couche (14) par l'effet d'un adhésif intermédiaire en polymère (16).

5. Une matière en feuille selon la revendication 4, dans laquelle une première surface de la deuxième couche (14) adhère par l'effet d'un adhésif de polymère (16) à une surface de la première couche (12), et dans laquelle une couche (22) résistant aux dégradations adhère à la deuxième surface de la deuxième couche (14) de feuille métallique par l'effet d'une couche adhésive (20).

6. Une matière en feuille selon la revendication 5, dans laquelle la couche (22) résistant aux dégradations est un nylon orienté de manière biaxiale.

EP 0 229 476 B1

7. Une matière en feuille selon l'une quelconque des revendications 1 à 6, dans laquelle la première couche (12) adhère à une première surface de la deuxième couche (14) par l'effet d'une couche (16) de copolymère de polypropylène insérée entre elles.

8. Une matière en feuille selon la revendication 7, comprenant une amorce (18) entre la deuxième couche (14) et la couche de copolymère de polypropylène (12), l'amorce comprenant des parties carboxy.

9. Une matière en feuille selon la revendication 7 ou la revendication 8, dans laquelle la couche de copolymère de polypropylène comprend des parties carboxy.

10. Une matière un feuille multicouche comprenant:

(a) une première couche (12) à base de polypropylène qui est un mélange à 35% à 90% en poids de copolymère de polypropylène et 65% à 10% en poids de polyisobutylène, le copolymère de polypropylène comprend 70 à 98 mole pour cent de parties de propylène et 30 à 2 mole pour cent de parties d'éthylène, et la composition d'ensemble dudit mélange comprenant au moins 1,8 mole pour cent d'éthylène;

(b) une deuxième couche (24) d'un polyamide, dont l'une des surfaces adhère à une surface de la première couche;

(c) une troisième couche (26) de barrière dont l'une des surfaces adhère à l'autre surface de la deuxième couche de polyamide (é4), la composition de la troisième couche comprenant (i) 50% à 90% en poids de copolymère d'éthylène vinyl alcool et (ii) 50% à 10% en poids d'un polymère compatible avec le copolymère d'éthylène vinyl alcool en composition mélangée;

(d) une quatrième couche (28) d'un polyamide, dont l'une des surfaces adhère à l'autre surface de la troisième couche (26).

11. Un matériel en feuille selon la revendication 10, dans lequel le mélange de la première couche comprend 60% à 80% en poids de copolymère de polypropylène et 40% à 20% en poids de polyisobutylène.

12. Une matière en feuille selon la revendication 10 ou la revendication 11, dans laquelle le copolymère de polypropylène de la première couche comprend 92 à 98 moles pour cent de partie de polypropylène et 2 à 8 moles pour cent de partie d'éthylène.

13. Une matière en feuille selon la revendication 10 ou 11 ou 12, comprenant de plus une couche (30) d'un copolymère adhésif entre lesdits première et deuxième couches (12, 24).

14. Une matière en feuille selon l'une quelconque des revendications 10 à 13, comprenant en outre une cinquième couche (22), en nylon orienté de manière biaxiale, sur l'autre surface de la quatrième couche.

15. Une matière en feuille selon l'une quelconque des revendications 11 à 14, dans laquelle le polymère compatible avec le copolymère d'éthyléne vinyl alcool est un copolymère en bloc de polyétheramide.

16. Une matière en feuille multicouche comprenant:

(a) une première couche à base de polypropylène (12) qui est un mélange de 35 à 90% en poids de copolymère de polypropylène et de 65 à 10% en poids de polyisobutylène, le copolymère de polypropylène comprenant 70 à 98 moles pour cent de partie de polypropylène et 30 à 2 moles pour cent de partie d'éthylène, et la composition d'ensemble du mélange comprenant au moins 1,8 mole pour cent d'éthylène; et

(b) une deuxième couche (36) d'un copolymère de chlorure de vinylidène qui adhère à une surface de la première couche par l'effet d'une troisième couche intermédiaire d'adhésif (34).

17. Une matière en feuille selon la revendication 16, comprenant de plus une quatrième couche (40) en un polyamide adhérant à l'autre dite surface de la deuxième couche par l'effet d'une cinquième couche d'adhésif (38).

18. Un procédé pour fabriquer une pellicule à couches multiples, le procédé comprenant la formation d'un mélange de particules comprenant un coplymère de polypropylène et du polyisobutylène, et la coextrusion du mélange avec un polyamide et une matière de copolymère de barrière pour former une matière en feuille multicouche, caractérisé en ce que le mélange polypropylène/polyisobutylène est un mélange de 35% à 90% en poids de copolymère de polypropylène et de 65% à 10% en poids de polyisobutylène, le copolymère de polypropylène comprenant 70 à 98 moles pour cent de partie de polypropylène et 30 à 2 moles pour cent de partie d'éthylène, la composition d'ensemble dudit mélange comprenant au moins 1,8 mole pour cent d'éthylène, et en ce que ladite matière en feuille comprend, dans l'ordre, dans la matière de feuille, une première couche (2) comprenant le mélange, une deuxième couche (24) d'un polyamide, une troisième couche (26) en matière de barrière et une quatrième couche (28) en un polyamide.

19. Un procédé selon la revendication 18 dans lequel la matière de barrière est réalisée en mélangeant 50% en poids à 90% en poids de copolymère d'éthylène vinyl alcool et 50% en poids à 10% en poids d'un copolymère compatible avec le copolymère d'éthylène vinyl alcool.

20. Un procédé selon la revendication 18 ou la revendication 19, dans lequel le mélange est réalisé à partir de particules dont la dimension est généralement supérieure à 0,5 µm en diamètre.

21. Un procédé selon l'une quelconque des revendications 18 à 20, dans lequel le copolymère compatible est un copolymère de bloc de polyétheramide.

22. Un emballage réalisé à partir de la matière en feuille selon l'une quelconque des revendications 1 à 17.

23. Un procédé de fabrication d'une couche de polymère, comprenant les étapes consistant à: effectuer une composition de mélange-maître, en (i) mélangeant du polyisobutylène, ajoutant au bain qui en résulte, des particules d'un homopolymère ou d'un copolymère de polypropylène, de préférence sous forme de paillettes ou pellets, pour former un mélange fondu, et (ii) chauffant le mélange fondu pour fondre le polypropylène, et mélangeant intimement le polypropylène et le polyisobutylène afin de former ainsi la composition du mélange-maître, réaliser un mélange de la composition du mélange-maître et d'un copolymère de polypropylène-éthylène, amener le mélange à une extrudeuse et extruder le mélange fondu à travers une filière de formation de couche pour former une couche sensiblement transparente, caractérisé en ce que la composition du mélange-maître et le copolymère de polypropylène-éthylène sont mélangés pour former un mélange à 35 à 90% en poids de copolymère de polypropylène et 65% à 10% en poids de polyisobutylène, le copolymère de polypropylène comprenant 70 à 98 moles pour cent de parties de polypropylène et 30 à 2 moles pour cent de parties d'éthylène, la compmsition d'ensemble dudit mélange comprenant au moins 1,8 mole pour cent d'éthylène.

24. Un procédé de fabrication d'une couche polymère comprenant les étapes consistant à mélanger du polyisobutylène, ajouter au bain des particules d'un homopolymère ou d'un copolymère de polypropylène, de préférence sous forme de paillettes ou pellets, pour former un mélange, chauffer le mélanger pour fondre le polypropylène, et mélanger intirmement le polypropylène et le polyisobutylène en un mélange de type polymère, et envoyer le mélange dans un extrudeuse pour extruder le bain à travers une filière de formation de couche, pour former une couche sensiblement transparente, caractérisé en ce que le mélange polypropylène/polyisobutylène est un mélange à 35% à 90% en poids de copolymère de polypropylène et 65% à 10% en poids de polyisobutylène, le copolymère de polypropylène comprenant 70 à 98 moles pour cent de fraction de polypropylène et 30 à 2 moles pour cent de fraction d'éthylène, la composition d'ensemble dudit mélange comprenant 1,8 mole pour cent d'éthylène.

25. Un procédé selon la revendication 23 ou la revendication 24 comprenant une coextrusion du mélange avec un polyamide et une matière de barrière en polymère pour former une matière de feuille multicouche, ladite matière de feuille comprenant, dans l'ordre dans la matière de feuille, une première couche (12) comprenant le mélange, une deuxième couche (24) en polyamide, une trosième couche (26) en matière de barrière et une quatrième couche (26) en polyamide.

— 12

# FIG. 1

— 14
— 12

# FIG.2

— 14
— 16
— 12

# FIG.3

— 22
— 20
— 14
— 18
— 16
— 12

# FIG. 4

1

FIG.5

FIG.6

2